# EUROPÄISCHE PATENTSCHRIFT

(11) **EP 2 831 973 B1**
(45) Veröffentlichungstag und Bekanntmachung des Hinweises auf die Patenterteilung: **11.05.2016**
(21) Anmeldenummer: 13706202.2
(22) Anmeldetag: 14.02.2013
(51) Int. Cl.: H02J 7/00, B60L 11/18

(54) **VERFAHREN ZUM UMLADEN VON ENERGIESPEICHERZELLEN EINER ENERGIESPEICHEREINRICHTUNG UND ENERGIESPEICHEREINRICHTUNG MIT UMLADBAREN ENERGIESPEICHERZELLEN**
METHOD FOR RELOADING ENERGY STORAGE CELLS OF AN ENERGY STORAGE DEVICE AND ENERGY STORAGE DEVICE HAVING RECHARGEABLE ENERGY STORAGE CELLS
PROCÉDÉ POUR RECHAGER DES ÉLÉMENTS ACCUMULATEURS D'ÉNERGIE D'UN DISPOSITIF D'ACCUMULATION D'ÉNERGIE ET DISPOSITIF D'ACCUMULATION D'ÉNERGIE DOTÉ D'ÉLÉMENTS ACCUMULATEURS D'ÉNERGIE RECHARGEABLES

(30) Priorität: 27.03.2012 DE 102012204861
(43) Veröffentlichungstag der Anmeldung: 04.02.2015
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwaebisch Gmuend (DE)
(86) Internationale Anmeldenummer: PCT/EP2013/052980
(87) Internationale Veröffentlichungsnummer: WO 2013/143769

(56) Entgegenhaltungen:
- DE-A1-102009 014 386
- DE-A1-102009 046 501
- DE-A1-102009 054 818
- US-A1- 2004 135 545

## Beschreibung

Die Erfindung betrifft ein Verfahren zum Umladen von Energiespeicherzellen einer Energiespeichereinrichtung und eine Energiespeichereinrichtung mit umladbaren Energiespeicherzellen, insbesondere eine Energiespeichereinrichtung mit modularem Batteriesystem für ein elektrisch betriebenes Fahrzeug.

### Stand der Technik

Es zeichnet sich ab, dass in Zukunft sowohl bei stationären Anwendungen, wie z.B. Windkraftanlagen oder Solaranlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren.

Die Einspeisung von mehrphasigem Strom in eine elektrische Maschine wird üblicherweise durch einen Umrichter in Form eines Pulswechselrichters bewerkstelligt. Dazu kann eine von einem Gleichspannungszwischenkreis bereitgestellte Gleichspannung in eine mehrphasige Wechselspannung, beispielsweise eine dreiphasige Wechselspannung umgerichtet werden. Der Gleichspannungszwischenkreis wird dabei von einem Strang aus seriell verschalteten Batteriemodulen gespeist. Um die für eine jeweilige Anwendung gegebenen Anforderungen an Leistung und Energie erfüllen zu können, werden häufig mehrere Batteriemodule in einer Traktionsbatterie in Serie geschaltet.

Die Druckschriften DE 10 2010 027 857 A1 und DE 10 2010 027 861 A1 offenbaren modular verschaltete Batteriezellen in Energiespeichereinrichtungen, die über eine geeignete Ansteuerung von Koppeleinheiten selektiv in den Strang aus seriell verschalteten Batteriezellen zu- oder abgekoppelt werden können. Systeme dieser Art sind unter dem Namen Battery Direct Converter (Batteriedirektwandler, BDC) bekannt. Solche Systeme umfassen Gleichstromquellen in einem Energiespeichermodulstrang, welche an einen Gleichspannungszwischenkreis zur elektrischen Energieversorgung einer elektrischen Maschine oder eines elektrischen Netzes über einen Pulswechselrichter anschließbar sind.

Aus des Druckschrift DE 102009 054818 A1 ist ein Verfahren zum Um Toden nach dem Oberbegriff des Anspruchs 1 bekannt.

Der Energiespeichermodulstrang weist dabei eine Mehrzahl von in Serie geschalteten Energiespeichermodulen auf, wobei jedes Energiespeichermodul mindestens eine Batteriezelle und eine zugeordnete steuerbare Koppeleinheit aufweist, welche es erlaubt, in Abhängigkeit von Steuersignalen die jeweils zugeordnete mindestens eine Batteriezelle zu überbrücken oder die jeweils zugeordnete mindestens eine Batteriezelle in den jeweiligen Energiespeichermodulstrang zu schalten. Optional kann die Koppeleinheit derart gestaltet sein, dass sie es zusätzlich erlaubt, die jeweils zugeordnete mindestens eine Batteriezelle auch mit inverser Polarität in den jeweiligen Energiespeichermodulstrang zu schalten oder auch den jeweiligen Energiespeichermodulstrang zu unterbrechen.

BDCs weisen üblicherweise einen höheren Wirkungsgrad und eine höhere Ausfallsicherheit gegenüber herkömmlichen Systemen auf. Die Ausfallsicherheit wird unter anderem dadurch gewährleistet, dass defekte, ausgefallene oder nicht voll leistungsfähige Batteriezellen durch geeignete Überbrückungsansteuerung der Koppeleinheiten aus dem Energieversorgungsstrang herausgeschaltet werden können. Die Gesamtausgangsspannung des Energiespeichermodulstrangs kann durch entsprechendes Ansteuern der Koppeleinheiten variiert und insbesondere stufig eingestellt werden. Die Stufung der Ausgangsspannung ergibt sich dabei aus der Spannung eines einzelnen Energiespeichermoduls, wobei die maximal mögliche Gesamtausgangsspannung durch die Summe der Spannungen aller Energiespeichermodule des Energiespeichermodulstrangs bestimmt wird.

Zur Einstellung einer Ausgangsspannung eines Energiespeichermoduls kann eine pulsbreitenmodulierte (PWM) Ansteuerung der Koppeleinheiten erfolgen. Dadurch ist es möglich, durch gezielte Variation der Ein- bzw. Ausschaltzeiten einen gewünschten Mittelwert als Energiespeichermodulspannung auszugeben.

Die in derartigen BDCs Batteriezellen sind aufgrund von fertigungs- und alterungsbedingten Schwankungen unterschiedlichen Zeitverläufen der Ladezustände bei der Entladung der Batteriezellen ausgesetzt. Durch die abweichenden Ladezustände kann es zu unterschiedlichen Beanspruchungen der Batteriezellen während des Betriebs des BDCs kommen, was die Lebensdauer und Leistungsfähigkeit des BDCs beeinträchtigen kann, insbesondere da sich geringfügige Unterschiede während der Betriebsdauer des BDC potenzieren können.

Es besteht daher ein Bedarf nach einer Methode, die Ladezustände von Batteriezellen eines BDC untereinander ausgleichen zu können, ohne dass Energie verloren geht bzw. Abwärme produziert wird.

### Offenbarung der Erfindung

Die vorliegende Erfindung betrifft ein Verfahren zum Umladen von Energiespeicherzellen einer Energiespeichereinrichtung nach den Merkmalen des Anspruchs 1.

Weitere Ausführungsformen der vorliegenden Erfindung sind in den abhängigen Ansprüchen dargestellt.

### Vorteile der Erfindung

Es ist Idee der vorliegenden Erfindung, eine modular aufgebaute Energiespeichereinrichtung mit in mindestens einem Energieversorgungsstrang seriell verschalteten Batteriezellen durch Nutzung eines an die Energiespeichereinrichtung gekoppelten Gleichspannungszwischenkreises als temporären Energiespeicher in einem aktiven Ausgleichsbetriebsmodus zu betreiben, bei dem elektrische Energie aus einem Energiespeichermodul entnommen, temporär in dem Gleichspannungszwischenkreis gespeichert und in ein anderes Energiespeichermodul umgeladen werden kann.

Dies hat einerseits den Vorteil, dass Unterschiede in den Ladezuständen der Energiespeicherzellen verschiedener Energiespeichermodule während des Betriebs der Energiespeichereinrichtung aktiv und dynamisch ausgeglichen werden können, was die Lebensdauer und Leistungsfähigkeit der Energiespeichereinrichtung dauerhaft verbessern kann. Ein Vorteil besteht darin, dass das Verfahren zum Umladen der Energiespeicherzellen auch dann genutzt werden kann, wenn die Energiespeichereinrichtung gerade nicht in einem aktiven Betriebsmodus, beispielsweise im Fahrbetrieb eines elektrisch betriebenen Fahrzeugs genutzt wird.

Andererseits wird das Umladen der Energiespeicherzellen ohne oder zumindest mit sehr wenigen Verlusten an elektrischer Energie in Form von Abwärme ermöglicht. Dadurch wird der Gesamtwirkungsgrad der Energiespeichereinrichtung und damit eines elektrischen Antriebssystems eines elektrisch betriebenen Fahrzeugs erhöht.

Zudem sind keine zusätzlichen Systemkomponenten für die Implementierung des aktiven Umladeverfahrens notwendig, da die verwendeten Bauteile ohnehin in dem Antriebssystem vorhanden sind. Besonders vorteilhaft ist dabei, dass auch den vorhandenen Komponenten inhärenten elektrischen Eigenschaften,wie beispielsweise parasitäre Ausgangsinduktivitäten in das Umladeverfahren miteinbezogen werden können, wodurch die Effizienz des Verfahrens optimiert werden kann.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Systems mit einer Energiespeichereinrichtung gemäß einer Ausführungsform der vorliegenden Erfindung;
- Fig. 2: eine schematische Darstellung eines Ausführungsbeispiels eines Energiespeichermoduls einer Energiespeichereinrichtung nach Fig. 1;
- Fig. 3: eine schematische Darstellung eines weiteren Ausführungsbeispiels eines Energiespeichermoduls einer Energiespeichereinrichtung nach Fig. 1; und
- Fig. 4: eine schematische Darstellung eines Verfahrens zum Umladen von Energiespeicherzellen einer Energiespeichereinrichtung gemäß einer weiteren Ausführungsform der vorliegenden Erfindung.

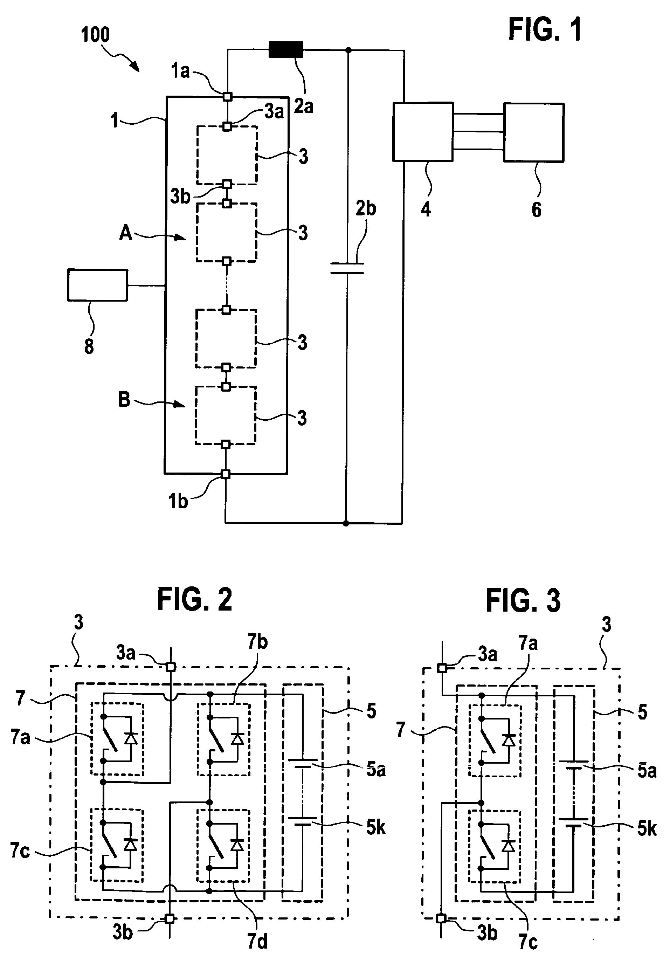

Fig. 1 zeigt ein System 100 zur Spannungswandlung von durch Energiespeichermodule 3 bereitgestellter Gleichspannung in eine n-phasige Wechselspannung. Das System 100 umfasst eine Energiespeichereinrichtung 1 mit Energiespeichermodulen 3, welche in einem Energieversorgungsstrang in Serie geschaltet sind. Der Energieversorgungsstrang ist zwischen zwei Ausgangsanschlüsse 1 a und 1 b der Energiespeichereinrichtung 1 gekoppelt, die jeweils an einen Gleichspannungszwischenkreis 2b gekoppelt sind. Beispielhaft dient das System 100 in Fig. 1 zur Speisung einer dreiphasigen elektrischen Maschine 6. Es kann jedoch auch vorgesehen sein, dass die Energiespeichereinrichtung 1 zur Erzeugung von elektrischem Strom für ein Energieversorgungsnetz 6 verwendet wird. Es ist weiterhin möglich, dass die Energiespeichereinrichtung 1 über mehrere parallel geschaltete Energieversorgungsstränge verfügt, die ebenfalls eine dem in Fig. 1 gezeigten Energieversorgungsstrang entsprechende Topologie aufweisen. Die parallel geschalteten Energieversorgungsstränge können alle mit den zwei Ausgangsanschlüssen 1a und 1b der Energiespeichereinrichtung 1 gekoppelt sein, und zur Erzeugung der Gesamtausgangsspannung der Energiespeichereinrichtung 1 herangezogen werden.

Dazu ist die Energiespeichereinrichtung 1 über eine Koppelinduktivität 2a mit dem Gleichspannungszwischenkreis 2b gekoppelt. Die Koppelinduktivität 2a kann beispielsweise eine gezielt zwischen den Gleichspannungszwischenkreis 2b und den Ausgangsanschluss 1a der Energiespeichereinrichtung 1 geschaltete induktive Drossel sein. Alternativ kann es auch möglich sein, dass die Koppelinduktivität 2a durch ohnehin vorhandene parasitäre Induktivitäten in der Verschaltung zwischen Energiespeichereinrichtung 1 und Gleichspannungszwischenkreis 2b gebildet wird.

Der Gleichspannungszwischenkreis 2b kann einen Pulswechselrichter 4 speisen, welcher aus der Gleichspannung des Gleichspannungszwischenkreises 2b eine dreiphasige Wechselspannung bereitstellt. Diese dreiphasige Wechselspannung kann für die elektrische Maschine 6 bereitgestellt werden. Der Pulswechselrichter 4 kann beispielsweise in raumzeigermodulierter Pulsbreitenmodulation (SVPWM, "space vector pulse width modulation") betrieben werden. Die Anzahl der Phasen der elektrischen Maschine 6 ist dabei nicht beschränkt, es kann jede andere Anzahl von Phasen ebenso möglich sein. Die elektrische Maschine 6 kann dabei eine Drehstrommaschine, eine Reluktanzmaschinen, eine elektrisch erregte oder permanent erregte Synchronmaschine, eine Asynchronmaschinen, oder einen bürstenlosen Gleichstrommotor (BLDC, "brushless DC motor") umfassen.

Das System 100 kann weiterhin eine Steuereinrichtung 8 umfassen, welche mit der Energiespeichereinrichtung 1 verbunden ist, und mithilfe derer die Energiespeichereinrichtung 1 gesteuert werden kann, um die gewünschte Gesamtausgangsspannung der Energiespeichereinrichtung 1 an den jeweiligen Ausgangsanschlüssen 1a, 1b bereitzustellen. Zudem kann die Steuereinrichtung 8 dazu ausgelegt sein, bei einem Umladen der Energiespeicherzellen der Energiespeichereinrichtung 1 die jeweiligen Koppelelemente bzw. aktiven Schaltelemente der Energiespeichereinrichtung 1 anzusteuern.

Der Energieversorgungsstrang der Energiespeichereinrichtung 1 weist mindestens zwei in Reihe geschaltete Energiespeichermodule 3 auf. Beispielhaft beträgt die Anzahl der Energiespeichermodule 3 in Fig. 1 vier, wobei jedoch jede andere Anzahl von Energiespeichermodulen 3 ebenso möglich ist. Die Energiespeichermodule 3 weisen jeweils zwei Ausgangsanschlüsse 3a und 3b auf, über welche eine Modulausgangsspannung der Energiespeichermodule 3 bereitgestellt werden kann. Da die Energiespeichermodule 3 primär in Reihe geschaltet sind, summieren sich die Modulausgangsspannungen der Energiespeichermodule 3 zu der Gesamtausgangsspannung, welche an den Ausgangsanschlüssen 1a, 1b der Energiespeichereinrichtung 1 bereitgestellt wird.

Zwei beispielhafte Aufbauformen der Energiespeichermodule 3 sind in den Fig. 2 und Fig. 3 in größerem Detail gezeigt. Die Energiespeichermodule 3 umfassen dabei jeweils eine Koppeleinrichtung 7 mit mehreren Koppelelementen 7a, 7c sowie 7b und 7d. Die Energiespeichermodule 3 umfassen weiterhin jeweils ein Energiespeicherzellenmodul 5 mit einem oder mehreren in Reihe geschalteten Energiespeicherzellen 5a bis 5k.

Das Energiespeicherzellenmodul 5 kann dabei beispielsweise in Reihe geschaltete Zellen 5a bis 5k, beispielsweise Lithium-lonen-Zellen oder -Akkumulatoren aufweisen. Dabei beträgt die Anzahl der Energiespeicherzellen 5a bis 5k in den in Fig. 2 und Fig. 3 gezeigten Energiespeichermodulen 3 beispielhaft zwei, wobei jedoch jede andere Zahl von Energiespeicherzellen 5a bis 5k ebenso möglich ist. Die Energiespeicherzellenmodule 5 weisen eine Klemmenspannung von U_{M} auf und sind über Verbindungsleitungen mit Eingangsanschlüssen der zugehörigen Koppeleinrichtung 7 verbunden. An den Eingangsklemmen der zugehörigen Koppeleinrichtung 7 liegt also die Spannung UM an.

In Fig. 2 bilden die in Reihe geschalteten Koppelelemente 7a und 7c, deren Mittelabgriff mit der Ausgangsklemmen 3a verbunden ist, den so genannten linken Zweig der Vollbrücke und es bilden die in Reihe geschalteten Koppelelemente 7b und 7d, deren Mittelabgriff mit der Ausgangsklemme 3b verbunden ist, den so genannten rechten Zweig der Vollbrücke. Die Koppeleinrichtung 7 ist in Fig. 2 als Vollbrückenschaltung mit je zwei Koppelelementen 7a, 7c und zwei Koppelelementen 7b, 7d ausgebildet. Die Koppelelemente 7a, 7b, 7c, 7d können dabei jeweils ein aktives Schaltelement, beispielsweise einen Halbleiterschalter, und eine dazu parallel geschaltete Freilaufdiode aufweisen. Die Koppeleinrichtungen 7a, 7b, 7c, 7d können beispielsweise Feldeffekttransistoren (FETs), Bipolartransistoren mit isoliertem Gate (IGBTs) oder andere geeignete Transistortypen bzw. tyhristor-basierte Komponenten aufweisen. Bei geeigneter Wahl der Leistungstransistorschalter können die Freilaufdioden zum Beispiel auch in den Leistungstransistorschalter integriert sein.

Die Koppelelemente 7a, 7b, 7c, 7d können derart angesteuert werden, beispielsweise mit Hilfe der in Fig. 1 dargestellten Steuereinrichtung 9, dass das jeweilige Energiespeicherzellenmodul 5 selektiv zwischen die Ausgangsanschlüsse 3a und 3b geschaltet wird oder dass das Energiespeicherzellenmodul 5 überbrückt wird. Mit Bezug auf Fig. 2 kann das Energiespeicherzellenmodul 5 beispielsweise in Vorwärtsrichtung zwischen die Ausgangsanschlüsse 3a und 3b geschaltet werden, indem das aktive Schaltelement des Koppelelements 7d und das aktive Schaltelement des Koppelelements 7a in einen geschlossenen Zustand versetzt werden, während die beiden übrigen aktiven Schaltelemente der Koppelelemente 7b und 7c in einen offenen Zustand versetzt werden. In diesem Fall liegt zwischen den Ausgangsklemmen 3a und 3b der Koppeleinrichtung 7 die Spannung UM an. Ein Überbrückungszustand kann beispielsweise dadurch eingestellt werden, dass die beiden aktiven Schaltelemente der Koppelelemente 7a und 7b in geschlossenen Zustand versetzt werden, während die beiden aktiven Schaltelemente der Koppelelemente 7c und 7d in offenem Zustand gehalten werden. Ein zweiter Überbrückungszustand kann beispielsweise dadurch eingestellt werden, dass die beiden aktiven Schalter der Koppelelemente 7c und 7d in geschlossenen Zustand versetzt werden, während die aktiven Schaltelemente der Koppelelemente 7a und 7b in offenem Zustand gehalten werden. In beiden Überbrückungszuständen liegt zwischen den beiden Ausgangsklemmen 3a und 3b der Koppeleinrichtung 7 die Spannung 0 an. Ebenso kann das Energiespeicherzellenmodul 5 in Rückwärtsrichtung zwischen die Ausgangsanschlüsse 3a und 3b der Koppeleinrichtung 7 geschaltet werden, indem die aktiven Schaltelemente der Koppelelemente 7b und 7c in geschlossenen Zustand versetzt werden, während die aktiven Schaltelemente der Koppelelemente 7a und 7d in offenen Zustand versetzt werden. In diesem Fall liegt zwischen den beiden Ausgangsklemmen 3a und 3b der Koppeleinrichtung 7 die Spannung -U_{M} an.

Durch geeignetes Ansteuern der Koppeleinrichtungen 7 können daher einzelne Energiespeicherzellenmodule 5 der Energiespeichermodule 3 gezielt in die Reihenschaltung des Energieversorgungsstrangs integriert werden. Dadurch kann durch eine gezielte Ansteuerung der Koppeleinrichtungen 7 zum selektiven Schalten der Energiespeicherzellenmodule 5 der Energiespeichermodule 3 in den Energieversorgungsstrang eine Gesamtausgangsspannung bereitgestellt werden, die von den einzelnen Ausgangsspannungen der Energiespeicherzellenmodule 5 der Energiespeichermodule 3 abhängig ist. Die Gesamtausgangsspannung kann dabei jeweils in Stufen eingestellt werden, wobei die Anzahl der Stufen mit der Anzahl der Energiespeichermodule 3 skaliert. Bei einer Anzahl von n Energiespeichermodulen 3 kann die Gesamt-Ausgangsspannung des Energieversorgungsstrangs in 2n+1 Stufen zwischen *- n· U_{M}*,...,0,...,+*n·U_{M}* eingestellt werden.

Fig. 3 zeigt eine schematische Darstellung einer weiteren beispielhaften Ausgestaltungsform für ein Energiespeichermodul 3. Dabei umfasst die Koppeleinrichtung 7 nur die Koppelelemente 7a und 7c, die als Halbbrückenschaltung das Energiespeicherzellenmodul 5 entweder in einen Überbrückungszustand oder einen Schaltzustand in Vorwärtsrichtung in den Energieversorgungsstrang geschaltet werden können. Im Übrigen gelten ähnliche Ansteuerregeln wie im Zusammenhang mit Fig. 3 für das dort gezeigte Energiespeichermodul 3 in Vollbrückenschaltung erläutert.

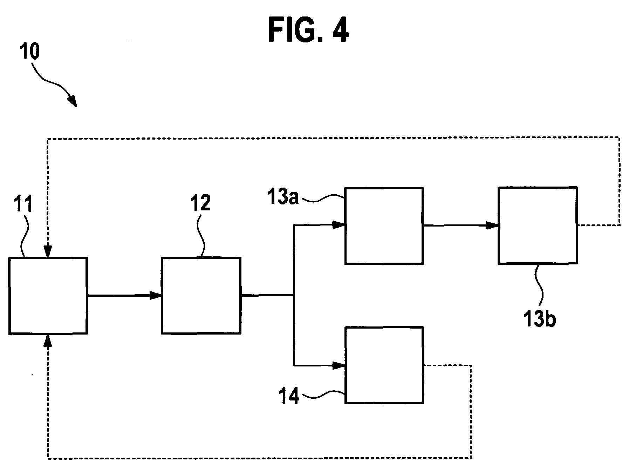

Fig. 4 zeigt eine schematische Darstellung eines Verfahrens 10 zum Umladen von Energiespeicherzellen einer Energiespeichereinrichtung, beispielsweise von Energiespeicherzellen 5a bis 5k der Energiespeichereinrichtung 1 in Fig. 1. Beispielhaft wird zur Erläuterung des Verfahrens 10 auf die mit A bzw. B gekennzeichneten Energiespeichermodule 3 der Energiespeichereinrichtung 1 in Fig. 1 Bezug genommen, wobei das Verfahren 10 prinzipiell für das Umladen von elektrischer Energie zwischen beliebigen der Energiespeichermodule 3 der Energiespeichereinrichtung 1 in Fig. 1 geeignet ist. Das Verfahren 10 eignet sich insbesondere für den Einsatz in elektrisch betriebenen Fahrzeugen, welche einen Elektromotor als elektrische Maschine 6 aufweisen.

Das Verfahren 10 kann als ersten Schritt 11 ein Übertragen von elektrischer Energie aus dem Energiespeicherzellenmodul 5 mindestens eines ersten Energiespeichermoduls 3 in einen mit der Energiespeichereinrichtung 1 gekoppelten Gleichspannungszwischenkreis 2b durch Ansteuern der Koppeleinrichtung 7 des ersten Energiespeichermoduls 3 zum Koppeln des Energiespeicherzellenmoduls 5 des ersten Energiespeichermoduls 3 mit dem Gleichspannungszwischenkreis 2b für eine erste vorbestimmte Zeitspanne. Beispielsweise kann das Energiespeichermodul A für eine bestimmte Zeitdauer in den Energieversorgungsstrang geschaltet werden, wenn aus dem Energiespeichermodul A Ladung entnommen werden soll. Die Anzahl der Energiespeichermodule 3, aus denen gleichzeitig Ladung entnommen werden kann, ist dabei prinzipiell unbegrenzt. Die Dauer der ersten vorbestimmten Zeitspanne kann von einem Betrag der Spannung in dem Gleichspannungszwischenkreis 2b abhängig sein. Wenn der Gleichspannungszwischenkreis 2b auf einen vorbestimmten Ladungswert aufgeladen ist, kann beispielsweise der Schritt 11 beendet werden.

Nach dem Übertragen der elektrischen Energie aus dem Energiespeichermodul A kann in einem optionalen Schritt 12 für kurze Zeit ein Öffnen aller Koppeleinrichtungen 7 erfolgen, um ungewollte Kurzschlüsse zu vermeiden, und um einen in die Koppelinduktivität 2a eingeprägten Strom abzubauen.

Das Verfahren 10 kann als dritten Schritt dann ein Übertragen der in dem Gleichspannungszwischenkreis 2b übertragenen elektrischen Energie in das Energiespeicherzellenmodul 5 mindestens eines zweiten Energiespeichermoduls 3 durch Ansteuern der Koppeleinrichtung 7 des zweiten Energiespeichermoduls 3 zum Koppeln des Energiespeicherzellenmoduls 5 des zweiten Energiespeichermoduls 3 mit dem Gleichspannungszwischenkreis 2b für eine zweite vorbestimmte Zeitspanne erfolgen, nachdem die erste vorbestimmte Zeitspanne verstrichen ist. Beispielsweise kann das Energiespeichermodul B für eine bestimmte Zeitdauer in den Energieversorgungsstrang geschaltet werden, wenn in das Energiespeichermodul B Ladung eingespeist werden soll. Die Anzahl der Energiespeichermodule 3, in die gleichzeitig Ladung eingespeist werden kann, ist dabei prinzipiell unbegrenzt.

Wenn die Energiespeichereinrichtung 1 über mehrere Energieversorgungsstränge verfügt, kann auch strangübergreifend elektrische Energie zwischen Energiespeichermodulen 3 verschiedener Energieversorgungsstränge umgeladen werden.

Wenn die Spannung im Gleichspannungszwischenkreis 2b höher als die Spannung der zu ladenden Energiespeichermodule 3 ist, kann in einem Schritt 14 die Ladung von dem Gleichspannungszwischenkreis 2b direkt in die zweiten Energiespeichermodule 3 eingespeist werden. Die zweite vorbestimmte Zeitspanne kann dabei beendet werden, wenn die Spannung am Gleichspannungszwischenkreis 2b auf das Niveau der zu ladenden zweiten Energiespeichermodule 3 abgefallen ist. Danach kann in einem erneuten Schritt 11 das Verfahren 10 iteriert werden, um einen weiteren Umladevorgang zu beginnen.

Wenn die Spannung im Gleichspannungszwischenkreis 2b niedriger als die Spannung der zu ladenden Energiespeichermodule 3 ist, können zunächst in einem Zwischenschritt 13a die Koppelinduktivität 2a und die Kapazität des Gleichspannungszwischenkreises 2b als Hochsetzsteller zusammenwirken, so dass die Spannung, die den zweiten Energiespeichermodulen 3 in dem Energieversorgungsstrang bereitgestellt werden kann, durch Hochsetzen der in dem Gleichspännungszwischenkreis 2b vorhandenen Spannung in der Koppelinduktivität 2a erhöht werden kann. Dazu wird zunächst ein Kurzschließen des Gleichspannungszwischenkreises 2b über den Energieversorgungsstrang durch Ansteuern der Koppeleinrichtungen 7 zum Überbrücken aller Energiespeichermodule 3 in dem Energieversorgungsstrang für eine dritte vorbestimmte Zeitspanne durchgeführt. Danach kann in einem Schritt 13b die Ladung von dem Gleichspannungszwischenkreis 2b in die zweiten Energiespeichermodule 3 eingespeist werden, bis der Strom in der Koppelinduktivität 2a wieder auf Null abgefallen ist. Danach kann in einem erneuten Schritt 11 das Verfahren 10 iteriert werden, um einen weiteren Umladevorgang zu beginnen.

Für den Schritt 13a können beispielsweise auch die parasitären Induktivitäten der Energiespeicherzellen 5a bis 5k bzw. der Energiespeicherzellenmodule 5 miteinbezogen werden, um die Hochsetzstellerfunktionalität zu gewährleisten.

Das Ansteuern der Koppeleinrichtungen 7 der Energiespeichermodule 3 zum Laden oder Entladen des Gleichspannungszwischenkreises kann derart getaktet erfolgen, dass der Strom aus den bzw. in die Energiespeicherzellenmodule 5 der Energiespeichermodule 3 vorbestimmte Stromgrenzwert nicht überschreitet, das heißt, die Energiespeichermodule 3 können intermittierend in den Energieversorgungsstrang geschaltet werden, um die Stromgrenzwerte für die Energiespeicherzellenmodule 5 nicht zu überschreiten.

Das Verfahren 10 kann in einem Ruhebetriebszustand der Energiespeichereinrichtung 1 durchgeführt werden, das heißt, in einem Betriebsmodus, in dem die Energiespeichereinrichtung 1 keine Versorgungsspannung für den Pulswechselrichter 4 bereitstellen muss. Alternativ kann das Verfahren 10 auch in einem Zustand geringer Leistungsaufnahme des Pulswechselrichters 4 erfolgen, so dass ein Teil der im Gleichspannungszwischenkreis 2b zur Verfügung stehenden Ladung in bestimmte Energiespeicherzellenmodule 5 umgeladen werden kann.

## Patentansprüche

1. Verfahren (10) zum Umladen von Energiespeicherzellen (5a, 5k) einer Energiespeichereinrichtung (1) mit einer Vielzahl von in mindestens einem Energieversorgungsstrang in Serie geschalteten Energiespeichermodulen (3), welche jeweils umfassen:
ein Energiespeicherzellenmodul (5), welches mindestens eine Energiespeicherzelle (5a, 5k) aufweist, und
eine Koppeleinrichtung (7) mit Koppelelementen (7a, 7b; 7c, 7d), welche dazu ausgelegt sind, das Energiespeicherzellenmodul (5) selektiv in den jeweiligen Energieversorgungsstrang zu schalten oder zu überbrücken,
wobei das Verfahren (10) die Schritte aufweist:
Übertragen (11) von elektrischer Energie aus dem Energiespeicherzellenmodul (5) mindestens eines ersten Energiespeichermoduls (3) in einen mit der Energiespeichereinrichtung (1) gekoppelten Gleichspannungszwischenkreis (2b) durch Ansteuern der Koppeleinrichtung (7) des ersten Energiespeichermoduls (3) zum Koppeln des Energiespeicherzellenmoduls (5) des ersten Energiespeichermoduls (3) mit dem Gleichspannungszwischenkreis (2b) für eine erste vorbestimmte Zeitspanne;
Übertragen (13b; 14) der in dem Gleichspannungszwischenkreis (2b) übertragenen elektrischen Energie in das Energiespeicherzellenmodul (5) mindestens eines zweiten Energiespeichermoduls (3) durch Ansteuern der Koppeleinrichtung (7) des zweiten Energiespeichermoduls (3) zum Koppeln des Energiespeicherzellenmoduls (5) des zweiten Energiespeichermoduls (3) mit dem Gleichspannungszwischenkreis (2b) für eine zweite vorbestimmte Zeitspanne, nachdem die erste vorbestimmte Zeitspanne verstrichen ist; **gekennzeichnet durch**
Kurzschließen (13a) des Gleichspannungszwischenkreises (2b) über einen der der Energieversorgungsstränge **durch** Ansteuern der Koppeleinrichtungen (7) zum Überbrücken aller Energiespeichermodule (3) in dem Energieversorgungsstrang für eine dritte vorbestimmte Zeitspanne zwischen der ersten vorbestimmten Zeitspanne und der zweiten vorbestimmte Zeitspanne.

2. Verfahren (10) nach Anspruch 1, wobei die Dauer der ersten vorbestimmten Zeitspanne von einem Betrag der Spannung in dem Gleichspannungszwischenkreis (2b) abhängig ist.

3. Verfahren (10) nach Anspruch 2, wobei das Kurzschließen (13a) des Gleichspannungszwischenkreises (2b) über eine Koppelinduktivität (2a) erfolgt.

4. Verfahren (10) nach einem der vorhergehenden Ansprüche, wobei das Kurzschließen (13a) des Gleichspannungszwischenkreises (2b) für eine dritte vorbestimmte Zeitspanne erfolgt, wenn die Spannung des Gleichspannungszwischenkreises (2b) geringer als die Spannung des mindestens einen zweiten Energiespeichermoduls (3) ist.

5. Verfahren (10) nach einem der Ansprüche 1 bis 4, wobei das Ansteuern der Koppeleinrichtung (7) des ersten Energiespeichermoduls (3) derart getaktet erfolgt, dass der Strom aus dem Energiespeicherzellenmodul (5) des ersten Energiespeichermoduls (3) einen ersten vorbestimmten Stromgrenzwert nicht überschreitet.

6. Verfahren (10) nach einem der Ansprüche 1 bis 5, wobei das Ansteuern der Koppeleinrichtung (7) des zweiten Energiespeichermoduls (3) derart getaktet erfolgt, dass der Strom in das Energiespeicherzellenmodul (5) des zweiten Energiespeichermoduls (3) einen zweiten vorbestimmten Stromgrenzwert nicht überschreitet.

7. System (100), mit:
einer Energiespeichereinrichtung (1) mit einer Vielzahl von in mindestens einem Energieversorgungsstrang in Serie geschalteten Energiespeichermodulen (3), welche jeweils umfassen:
ein Energiespeicherzellenmodul (5), welches mindestens eine Energiespeicherzelle (5a, 5k) aufweist, und
eine Koppeleinrichtung (7) mit Koppelelementen (7a, 7b; 7c, 7d), welche dazu ausgelegt sind, das Energiespeicherzellenmodul (5) selektiv in den jeweiligen Energieversorgungsstrang zu schalten oder zu überbrücken, wobei die Koppeleinrichtungen (7) Koppelelemente (7a; 7b; 7c; 7d) in Vollbrückenschaltung oder Koppelelemente (7a; 7b; 7c; 7d) in Halbbrückenschaltung umfassen;
einem Gleichspannungszwischenkreis (2b), welcher mit Ausgangsanschlüssen (1a, 1b) der Energiespeichereinrichtung (1) gekoppelt ist; und
einer Steuereinrichtung (8), welche mit den Koppeleinrichtungen (7) gekoppelt ist, und welche dazu ausgelegt ist, die Koppeleinrichtungen (7) der Energiespeichereinrichtung (1) zum Bereitstellen einer Gesamtausgangsspannung der Energiespeichereinrichtung (1) selektiv anzusteuern und ein Verfahren (10) nach einem der Ansprüche 1 bis 6 durchzuführen.

8. System (100) nach Anspruch 7, weiterhin mit:
mindestens einer Koppelinduktivität (2a), welche zwischen einen Ausgangsanschluss (1a) der Energiespeichereinrichtung (1) und den Gleichspannungszwischenkreis (2b) gekoppelt ist.

9. System (100) nach einem der Ansprüche 7 oder 8, weiterhin mit:
einem Pulswechselrichter (4), welcher mit dem Gleichspannungszwischenkreis (2b) gekoppelt ist, und welcher aus dem Gleichspannungszwischenkreis (2b) mit einer Eingangsspannung gespeist wird.

10. System (100) nach Anspruch 9, weiterhin mit:
einer elektrischen Maschine (6), welche mit dem Pulswechselrichter (4) gekoppelt ist, und welche von dem Pulswechselrichter (4) mit einer Phasenspannung versorgt wird.

## Claims

1. Method (10) for recharging energy storage cells (5a, 5k) of an energy storage device (1) comprising a multiplicity of energy storage modules (3) connected in series in at least one energy supply string and each comprising:
an energy storage cell module (5) having at least one energy storage cell (5a, 5k), and
a coupling device (7) comprising coupling elements (7a, 7b; 7c, 7d) designed for selectively switching the energy storage cell module (5) into the respective energy supply string or bridging it,
wherein the method (10) comprises the following steps:
transferring (11) electrical energy from the energy storage cell module (5) of at least one first energy storage module (3) into a DC voltage intermediate circuit (2b), which is coupled to the energy storage device (1), by driving the coupling device (7) of the first energy storage module (3) for coupling the energy storage cell module (5) of the first energy storage module (3) to the DC voltage intermediate circuit (2b) for a first predetermined time period;
transferring (13b; 14) the electrical energy transferred in the DC voltage intermediate circuit (2b) into the energy storage cell module (5) of at least one second energy storage module (3) by driving the coupling device (7) of the second energy storage module (3) for coupling the energy storage cell module (5) of the second energy storage module (3) to the DC voltage intermediate circuit (2b) for a second predetermined time period after the first predetermined time period has elapsed;
**characterized by**
short-circuiting (13a) the DC voltage intermediate circuit (2b) via one of the energy supply strings by driving the coupling devices (7) for bridging all the energy storage modules (3) in the energy supply string for a third predetermined time period between the first predetermined time period and the second predetermined time period.

2. Method (10) according to Claim 1, wherein the duration of the first predetermined time period is dependent on an absolute value of the voltage in the DC voltage intermediate circuit (2b).

3. Method (10) according to Claim 2, wherein short-circuiting (13a) the DC voltage intermediate circuit (2b) is carried out via a coupling inductance (2a).

4. Method (10) according to any of the preceding claims, wherein short-circuiting (13a) the DC voltage intermediate circuit (2b) for a third predetermined time period is carried out if the voltage of the DC voltage intermediate circuit (2b) is less than the voltage of the at least one second energy storage module (3).

5. Method (10) according to any of Claims 1 to 4, wherein driving the coupling device (7) of the first energy storage module (3) is carried out in a clocked manner in such a way that the current from the energy storage cell module (5) of the first energy storage module (3) does not exceed a first predetermined current limit value.

6. Method (10) according to any of Claims 1 to 5, wherein driving the coupling device (7) of the second energy storage module (3) is carried out in a clocked manner in such a way that the current into the energy storage cell module (5) of the second energy storage module (3) does not exceed a second predetermined current limit value.

7. System (100) comprising:
an energy storage device (1) comprising a multiplicity of energy storage modules (3) connected in series in at least one energy supply string and each comprising:
an energy storage cell module (5) having at least one energy storage cell (5a, 5k), and
a coupling device (7) comprising coupling elements (7a, 7b; 7c, 7d) designed for selectively switching the energy storage cell module (5) into the respective energy supply string or bridging it, wherein the coupling devices (7) comprise coupling elements (7a; 7b; 7c; 7d) connected in a full-bridge circuit or coupling elements (7a; 7b; 7c; 7d) connected in a half-bridge circuit;
a DC voltage intermediate circuit (2b) which is coupled to output terminals (1a, 1b) of the energy storage device (1); and
a control device (8) which is coupled to the coupling devices (7) and which is designed selectively to drive the coupling devices (7) of the energy storage device (1) for providing a total output voltage of the energy storage device (1) and to carry out a method (10) according to any of Claims 1 to 6.

8. System (100) according to Claim 7, furthermore comprising:
at least one coupling inductance (2a) which is coupled between an output terminal (1a) of the energy storage device (1) and the DC voltage intermediate circuit (2b).

9. System (100) according to either of Claims 7 and 8, furthermore comprising:
a pulse-controlled inverter (4) which is coupled to the DC voltage intermediate circuit (2b) and which is fed with an input voltage from the DC voltage intermediate circuit (2b).

10. System (100) according to Claim 9, furthermore comprising:
an electrical machine (6), which is coupled to the pulse-controlled inverter (4) and which is supplied with a phase voltage by the pulse-controlled inverter (4).

## Revendications

1. Procédé (10) de décharge de cellules (5a, 5k) d'accumulation d'énergie d'un dispositif (1) d'accumulation d'énergie présentant plusieurs modules (3) d'accumulation d'énergie raccordés en série pour former au moins une chaîne d'alimentation en énergie et présentant chacun :
un module (5) de cellules d'accumulation d'énergie qui présente au moins une cellule (5a, 5k) d'accumulation d'énergie,
un dispositif de raccordement (7) présentant des éléments de raccordement (7a, 7b; 7c, 8d) conçus pour raccorder ou contourner sélectivement le module (5) de cellules d'accumulation d'énergie de la chaîne d'accumulation d'énergie concernée,
le procédé (10) comportant les étapes qui consistent à :
transférer (11) de l'énergie électrique du module (5) de cellules d'accumulation d'énergie d'au moins un premier module (3) d'accumulation d'énergie à un circuit intermédiaire (2b) à tension continue raccordé au dispositif (1) d'accumulation d'énergie en amenant le dispositif de raccordement (7) du premier module (3) d'accumulation d'énergie à raccorder le module (5) de cellules d'accumulation d'énergie du premier module (3) d'accumulation d'énergie au circuit intermédiaire (2b) à tension continue pendant une première durée prédéterminée,
transférer (13b; 14) l'énergie électrique transférée dans le circuit intermédiaire (2b) à tension continue dans le module (5) de cellules d'accumulation d'énergie d'au moins un deuxième module (3) d'accumulation d'énergie en amenant le dispositif de raccordement (7) du deuxième module (3) d'accumulation d'énergie à raccorder le module (5) de cellules d'accumulation d'énergie du deuxième module (3) d'accumulation d'énergie au circuit intermédiaire (2b) à tension continue pendant une deuxième durée prédéterminée après que la première durée prédéterminée s'est écoulée,
**caractérisé par**
la mise en court-circuit (13a) du circuit intermédiaire (2b) à tension continue pendant une troisième durée prédéterminée qui s'écoule entre la première durée prédéterminée et la deuxième durée prédéterminée, par l'intermédiaire de l'une des chaînes d'alimentation en énergie, en amenant les dispositifs de raccordement (7) à contourner tous les modules (3) d'accumulation d'énergie de la chaîne d'alimentation en énergie.

2. Procédé (10) selon la revendication 1, dans lequel la longueur de la première durée prédéterminée dépend du niveau de la tension qui règne dans le circuit intermédiaire (2b) à tension continue.

3. Procédé (10) selon la revendication 2, dans lequel la mise en court-circuit (13a) du circuit intermédiaire (2b) à tension continue s'effectue par l'intermédiaire d'une inductance de raccordement (2a).

4. Procédé (10) selon l'une des revendications précédentes, dans lequel la mise en court-circuit (13a) du circuit intermédiaire (2b) à tension continue s'effectue pendant une troisième durée prédéterminée si la tension du circuit intermédiaire (2b) à tension continue est inférieure à la tension du ou des deuxièmes modules (3) d'accumulation d'énergie.

5. Procédé (10) selon l'une des revendications 1 à 4, dans lequel la commande du dispositif de raccordement (7) du premier module (3) d'accumulation d'énergie s'effectue de manière cadencée de telle sorte que le courant qui provient du module (5) de cellules d'accumulation d'énergie du premier module (3) d'accumulation d'énergie ne dépasse pas une première valeur limite prédéterminée de courant.

6. Procédé (10) selon l'une des revendications 1 à 5, dans lequel la commande du dispositif de raccordement (7) du deuxième module (3) d'accumulation d'énergie s'effectue de manière cadencée de telle sorte que le courant qui s'écoule dans le module (5) de cellules-d'accumulation d'énergie du deuxième module (3) d'accumulation d'énergie ne dépasse pas une deuxième valeur limite de courant prédéterminée.

7. Système (100) présentant :
un dispositif (1) d'accumulation d'énergie qui présente plusieurs modules (3) d'accumulation d'énergie raccordés en série pour former au moins une chaîne d'alimentation en énergie et comprenant chacun :
un module (5) de cellules d'accumulation d'énergie qui présente au moins une cellule (5a, 5k) d'accumulation d'énergie,
un dispositif de raccordement (7) présentant des éléments de raccordement (7a, 7b; 7c, 7d) conçus pour raccorder ou contourner sélectivement le module (5) de cellules d'accumulation d'énergie de la chaîne d'accumulation d'énergie concernée, les dispositifs de raccordement (7) comportant des éléments de raccordement (7a, 7b; 7c, 7d) raccordés dans un circuit en pont complet ou des éléments de raccordement (7a; 7b; 7c; 7d) raccordés en un circuit en demi-pont,
un circuit intermédiaire (2b) à tension continue qui est raccordé à des bornes de raccordement de sortie (1a, 1b) du dispositif (1) d'accumulation d'énergie et
un dispositif de commande (8) raccorder aux dispositifs de raccordement (7) et conçu pour amener sélectivement les dispositifs de raccordement (7) du dispositif (1) d'accumulation d'énergie à délivrer une tension de sortie totale du dispositif (1) d'accumulation d'énergie et pour mettre en oeuvre un procédé (10) selon l'une des revendications 1 à 6.

8. Système (100) selon la revendication 7, doté en outre d'au moins une inductance de raccordement (2a) raccordée entre la borne de raccordement de sortie (1a) du dispositif (1) d'accumulation d'énergie et le circuit intermédiaire (2b) à tension continue.

9. Système (100) selon l'une des revendications 7 ou 8, présentant en outre un onduleur pulsé (4) raccordé au circuit intermédiaire (2b) à tension continue et alimenté en une tension d'entrée provenant du circuit intermédiaire (2b) à tension continue.

10. Système (100) selon la revendication 9, présentant en outre une machine électrique (6) raccordée à l'onduleur pulsé (4) et alimentée en une tension de phase par l'onduleur pulsé (4).
